# EUROPÄISCHE PATENTSCHRIFT

(11) **EP 2 166 057 B1**
(45) Veröffentlichungstag und Bekanntmachung des Hinweises auf die Patenterteilung: **28.12.2011**
(21) Anmeldenummer: 09167798.9
(22) Anmeldetag: 13.08.2009
(51) Int. Cl.: C09J 133/00

(54) **Klebstoffzusammensetzung für selbstklebende, wiederablösbare Artikel auf Basis von adhäsiven Polymeren und organischen Nanopartikeln**
Adhesive compound for self-adhesive, detachable item on the basis of adhesive polymers and organic nanoparticles
Composition de colle pour articles amovibles autocollants à base de polymères adhésifs et de nanoparticules organiques

(30) Priorität: 26.08.2008 EP 08162983
(43) Veröffentlichungstag der Anmeldung: 24.03.2010
(73) Patentinhaber: BASF SE, 67056 Ludwigshafen (DE)
(72) Erfinder: Diehl, Heiko, 67136 Fußgönheim (DE); Dragon, Andree, 67346 Speyer (DE); Schöcker, Petra, 68642 Bürstadt (DE)

(56) Entgegenhaltungen:
- EP-A- 0 697 417
- WO-A-2008/033975
- US-A1- 2002 055 587

## Beschreibung

Die Erfindung betrifft eine Klebstoffzusammensetzung mit Gehalt an einem ersten, verfilmenden organischen Polymer mit niedriger Glasübergangstemperatur und einem zweiten, nicht verfilmenden, nanopartikulärem organischen Polymer mit hoher Glasübergangstemperatur sowie mit dieser Zusammensetzung beschichtete, selbstklebende, vorzugsweise wiederablösbare Artikel.

Für viele Anwendungen sind selbstklebende Artikel wie z.B. Etiketten, Folien und Bänder gewünscht, die später vom Substrat leicht wieder abgezogen werden können. Die selbstklebenden Artikel sollen einerseits eine gute Haftung zum Substrat haben, andererseits sollen nach dem Abziehen der Etiketten, Bänder oder Folien keine Rückstände auf dem Substrat verbleiben. Bekannte selbstklebende Artikel weisen einen Haftklebstoff auf. Bei vielen Haftklebstoffen ist bereits die Anfangsklebrigkeit für eine leichte Wiederablösbarkeit zu hoch oder es kann zu einem zeitlichen Anstieg der Klebrigkeit kommen, sodass nach längerer Zeit der Artikel nicht mehr leicht vom Substrat abgelöst werden kann oder nach der Ablösung vermehrt unerwünschte Rückstände auf dem Substrat verbleiben.

Wiederablösbare, selbstklebende Artikel sind bekannt, bei denen die reduzierte Klebrigkeit und die Wiederablösbarkeit durch Zusatz von mikropartikulären, anorganischen Teilchen, z.B. Kieselgelteilchen erreicht wird. Diese Teilchen sind abrasiv und können zu einem erhöhten Verschleiß von Apparaturen bei der Herstellung führen. Außerdem ist ein erhöhter Aufwand zur Stabilisierung erforderlich, da sich die Teilchen in wässrigen Dispersionen leicht absetzen können.

In der WO 2006/025957 werden Harzdispersionen mit multi-modaler Partikelgrößenverteilung beschrieben. Die Erweichungstemperaturen der Harze können im Bereich von 30 bis 160°C liegen. Aus der EP 1371704 und aus der EP 1371705 sind Dispersionen bekannt mit Gehalt an polymeren Nanopartikeln. Aus der Tabelle des Beispiels 2 der EP 1371705 geht hervor, dass ein Zusatz der dort verwendeten polymeren Nanopartikel zu einer schwereren Wiederablösbarkeit (höhere Peel Value Werte) führt. In der EP 1245587 werden Beschichtungszusammensetzungen beschrieben, welche polymere Nanopartikel enthalten. Bevorzugte Glasübergangstemperaturen der polymeren Nanopartikel sind kleiner 25°C. Aus der WO 2003/072654 sind Haftklebstoffzusammensetzungen bekannt, welche neben einem adhäsiven Klebstoffpolymer eine Dispersion von dispergiertem Polyethylenwachs enthält. Das Polyethylen verfilmt mit dem Klebstoffpolymer und führt zu einer stärkeren Verklebung, was sich durch eine größere Scherfestigkeit und eine größere Schälfestigkeit bemerkbar macht.

Aufgabe der vorliegenden Erfindung war es, eine Klebstoffzusammensetzung zur Verfügung zu stellen, wobei die Klebrigkeit so weit vermindert ist, dass damit beschichtete Artikel nach deren Verklebung wieder leicht ablösbar sind. Die leichte Wiederablösbarkeit sollte dabei möglichst nicht durch eine mit der Zeit ansteigende Klebrigkeit beeinträchtigt werden. Dennoch sollte die Anfangsklebrigkeit (Quick Stick) ausreichend hoch sein.

Gegenstand der Erfindung ist eine Klebstoffzusammensetzung, welche in einem Lösungsmittel mindestens ein erstes organisches Polymer und mindestens ein davon verschiedenes zweites organisches Polymer enthält, wobei sich die Glasübergangstemperaturen der Polymere um mindestens 50°C unterscheiden und
(a) das erste Polymer ein adhäsives Polymer ist, welches eine Glasübergangstemperatur von kleiner oder gleich 0°C aufweist und bei Auftragen der Zusammensetzung auf einem Substrat und anschließender Trocknung verfilmt und
(b) das zweite Polymer in der Zusammensetzung als dispergierte, feste Nanopartikel vorliegt, eine mittlere Teilchengröße von kleiner oder gleich 50 nm und eine Glasübergangstemperatur von mindestens 50°C aufweist und bei Auftragen der Zusammensetzung auf einem Substrat und anschließender Trocknung nicht verfilmt.

Gegenstand der Erfindung sind auch selbstklebende Artikel, deren jeweilige Oberfläche zumindest teilweise mit einer erfindungsgemäßen Klebstoffzusammensetzung beschichtet ist. Gegenstand der Erfindung sind auch mit den erfindungsgemäßen selbstklebenden Artikeln versehene Substrate.

Gegenstand der Erfindung ist auch die Verwendung von organischen Polymerpartikeln mit einer mittleren Teilchengröße von kleiner oder gleich 50 nm und einer Glasübergangstemperatur von mindestens 50°C zur Herstellung wiederablösbarer, selbstklebender Artikel.

Im Folgenden wird die Bezeichnung (Meth)acrylat und ähnliche Bezeichnungen als abkürzende Schreibweise verwendet für "Acrylat oder Methacrylat". Als Lösungsmittel werden bei Raumtemperatur (20°C) flüssige Trägerstoffe verstanden, in welchem die Polymere gelöst oder dispergiert vorliegen. Besonders bevorzugt ist Wasser.

Die Zusammensetzung enthält mindestens ein erstes organisches Polymer. Dieses Polymer ist adhäsiv, d.h. ist in der Lage, Werkstücke zu verbinden, ohne dass die Werkstücke selbst merklich verändert werden, wobei der Zusammenhalt der verbunden Werkstücke durch Adhäsionskräfte (Anziehungskräfte zwischen Adhäsiv und Werkstück) und Kohäsion (innerer Zusammenhalt des Adhäsiv) bestimmt wird. Bevorzugte erste Polymere sind erhältlich durch radikalische Polymerisation von ethylenisch ungesättigten Verbindungen (Monomeren). Besonders bevorzugt sind Emulsionspolymerisate, d.h. die Reaktionsprodukte der Polymerisation der Monomere in wässriger Dispersion.

Das erste Polymer besteht vorzugsweise zu mindestens 40 Gew.% oder zu mindestens 60 Gew.%, oder zu mindestens 80 Gew.%, besonders bevorzugt zu mindestens 90 Gew.% aus so genannten Hauptmonomeren. Die Hauptmonomeren sind vorzugsweise ausgewählt aus C₁-C₂₀-Alkyl(meth)acrylaten, Vinylestern von bis zu 20 C-Atome enthaltenden Carbonsäuren, Vinylaromaten mit bis zu 20 C-Atomen, ethylenisch ungesättigten Nitrilen, Vinylhalogeniden, Vinylethern von 1 bis 10 C-Atome enthaltenden Alkoholen, aliphatischen Kohlenwasserstoffen mit 2 bis 8 C-Atomen und ein oder zwei Doppelbindungen oder Mischungen dieser Monomeren.

Geeignete Monomere sind z.B. (Meth)acrylsäurealkylester mit einem C₁-C₁₀-Alkylrest, wie Methylmethacrylat, Methylacrylat, n-Butylacrylat, Ethylacrylat und 2-Ethylhexylacrylat. Insbesondere sind auch Mischungen der (Meth)acrylsäurealkylester geeignet. Vinylester von Carbonsäuren mit 1 bis 20 C-Atomen sind z.B. Vinyllaurat, Vinylstearat, Vinylpropionat, Versaticsäurevinylester und Vinylacetat. Als vinylaromatische Verbindungen kommen Vinyltoluol, a- und p-Methylstyrol, a-Butylstyrol, 4-n-Butylstyrol, 4-n-Decylstyrol und vorzugsweise Styrol in Betracht. Beispiele für Nitrile sind Acrylnitril und Methacrylnitril. Die Vinylhalogenide sind mit Chlor, Fluor oder Brom substituierte ethylenisch ungesättigte Verbindungen, bevorzugt Vinylchlorid und Vinylidenchlorid. Als Vinylether zu nennen sind z.B. Vinylmethylether oder Vinylisobutylether. Bevorzugt sind Vinylether von 1 bis 4 C-Atome enthaltenden Alkoholen. Geeignete Kohlenwasserstoffe mit 4 bis 8 C-Atomen und zwei olefinischen Doppelbindungen sind zum Beispiel Butadien, Isopren und Chloropren.

Als Hauptmonomere bevorzugt sind C₁- bis C₁₀-Alkylacrylate und C₁- bis C₁₀-Alkylmethacrylate, insbesondere C₁- bis C₈-Alkylacrylate und -methacrylate, Vinylaromaten, insbesondere Styrol und Kohlenwasserstoffe mit 4 bis 8 C-Atomen und zwei olefinischen Doppelbindungen, insbesondere Butadien und Mischungen dieser Monomere. Ganz besonders bevorzugt sind Methylacrylat, Methylmethacrylat, Ethylacrylat, n-Butylacrylat, n-Hexylacrylat, Octylacrylat und 2-Ethylhexylacrylat, Styrol, Butadien sowie Mischungen dieser Monomere.

Neben den Hauptmonomeren kann das Polymer weitere Monomere enthalten, z.B. Monomere mit Carbonsäure-, Sulfonsäure- oder Phosphonsäuregruppen. Bevorzugt sind Carbonsäuregruppen. Genannt seien z.B. Acrylsäure, Methacrylsäure, Itaconsäure, Maleinsäure oder Fumarsäure. Der Gehalt an Säure-Monomeren im Polymer kann z. B. 0 bis 10 Gew. %, insbesondere 0,05 bis 5 Gew. %, bezogen auf das Polymer betragen. Die Säuregruppen können in Form ihrer Salze vorliegen. Weitere Monomere sind z.B. auch Hydroxylgruppen enthaltende Monomere, insbesondere C₁-C₁₀-Hydroxyalkyl(meth)acrylate oder (Meth)acrylamid. Als weitere Monomere seien darüber hinaus Phenyloxyethylglykolmono-(meth)acrylat, Glycidyl(meth)acrylat, Aminoalkyl(meth)acrylate wie z.B. 2-Aminoethyl-(meth)acrylat genannt. Alkylgruppen weisen vorzugsweise von 1 bis 20 C-Atome auf. Als weitere Monomere seien auch vernetzende Monomere genannt. Die weiteren Monomere werden im Allgemeinen in untergeordneten Mengen eingesetzt, ihr Anteil liegt insgesamt vorzugsweise unter 10 Gew. %, insbesondere unter 5 Gew. %.

Insbesondere ist das Polymer zu mindestens 60 Gew.%, besonders bevorzugt zu mindestens 80 Gew.% und ganz besonders bevorzugt zu mindestens 90 oder zu mindestens 95 Gew.% aus C₁ bis C₂₀ Alkyl(meth)acrylaten aufgebaut. Ein weiteres bevorzugtes Polymer ist Butadien/Styrol Copolymer.

Die Art und Menge der Monomere bzw. die Verhältnisse verschiedener Comonomere zueinander ist dabei derart, dass die Glasübergangstemperatur des ersten Polymers kleiner oder gleich 0°C, oder kleiner oder gleich -10°C oder kleiner oder gleich -20°C, z.B. von -60 bis -10°C oder von -60 bis -20°C beträgt. Die Glasübergangstemperatur lässt sich nach üblichen Methoden wie Differential Scanning Calorimetrie (s. z.B. ASTM 3418/82, sog. "midpoint temperature") bestimmen.

Die Herstellung der Emulsionspolymerisate erfolgt durch Emulsionspolymerisation unter Verwendung von Emulgatoren und/oder Schutzkolloiden bzw. Stabilisatoren als grenzflächenaktive Substanzen. Vorzugsweise werden als grenzflächenaktive Substanzen ausschließlich Emulgatoren eingesetzt, deren Molekulargewicht im Unterschied zu den Schutzkolloiden üblicherweise unter 2000 g/mol liegen. Vorzugsweise werden anionische und nichtionische Emulgatoren als grenzflächenaktive Substanzen verwendet. Gebräuchliche Emulgatoren sind z.B. ethoxylierte Fettalkohole (EO-Grad: 3 bis 50, Alkylrest: C₈- bis C₃₆), ethoxylierte Mono-, Di- und Tri-Alkylphenole (EO-Grad: 3 bis 50, Alkylrest: C₄- bis C₉), sowie Alkali- und Ammoniumsalze von Alkylsulfaten (Alkylrest: C₈- bis C₁₂), von ethoxylierten Alkanolen (EO-Grad: 4 bis 30, Alkylrest: C₁₂- bis C₁₈), von ethoxylierten Alkylphenolen (EO-Grad: 3 bis 50, Alkylrest: C₄- bis C₉), von Alkylsulfonsäuren (Alkylrest: C₁₂- bis C₁₈) und von Alkylarylsulfonsäuren (Alkylrest: C₉-bis C₁₈). Handelsprodukte geeigneter Emulgatoren sind z.B. Dowfax^{®}2 A1, Emulan^{®} NP 50, Dextrol^{®} OC 50, Emulgator 825, Emulgator 825 S, Emulan^{®} OG, Texapon^{®} NSO, Nekanil^{®} 904 S, Disponil^{®} FES 77, Lutensol^{®} AT 18, Steinapol VSL, Emulphor NPS 25.

Die Emulsionspolymerisation kann mit wasserlöslichen Initiatoren gestartet werden. Wasserlösliche Initiatoren sind z.B. Ammonium- und Alkalimetallsalze der Peroxodischwefelsäure, z.B. Natriumperoxodisulfat, Wasserstoffperoxid oder organische Peroxide, z.B. tert-Butylhydroperoxid. Als Initiator geeignet sind auch so genannte Reduktions-Oxidations(Red-Ox)-Initiator Systeme. Die Red-Ox-Initiator-Systeme bestehen aus mindestens einem meist anorganischen Reduktionsmittel und einem anorganischen oder organischen Oxidationsmittel. Bei der Oxidationskomponente handelt es sich z.B. um die bereits vorstehend genannten Initiatoren für die Emulsionspolymerisation. Bei der Reduktionskomponente handelt es sich z.B. um Alkalimetallsalze der schwefligen Säure, wie z.B. Natriumsulfit, Natriumhydrogensulfit, Alkalisalze der dischwefligen Säure wie Natriumdisulfit, Bisulfitadditionsverbindungen aliphatischer Aldehyde und Ketone, wie Acetonbisulfit oder Reduktionsmittel wie Hydroxymethansulfinsäure und deren Salze, oder Ascorbinsäure. Die Red-Ox-Initiator-Systeme können unter Mitverwendung löslicher Metallverbindungen, deren metallische Komponente in mehreren Wertigkeitsstufen auftreten kann, verwendet werden. Übliche Red-Ox-Initiator-Systeme sind z.B. Ascorbinsäure/Eisen(II)sulfat/Natriumperoxidisulfat, tert-Butylhydroperoxid/Natriumdisulfit, tert-Butylhydroperoxid/Na-Hydroxymethansulfinsäure. Die einzelnen Komponenten, z.B. die Reduktionskomponente, können auch Mischungen sein z.B. eine Mischung aus dem Natriumsalz der Hydroxymethansulfinsäure und Natriumdisulfit. Es können auch mehrere, verschiedene Initiatoren bei der Emulsionspolymerisation Verwendung finden.

Bei der Polymerisation können Molekulargewichtsregler eingesetzt werden, z.B. in Mengen von 0,1 bis 0,8 Gew.-Teile, bezogen auf 100 Gew.-Teile der zu polymerisierenden Monomeren. Hierdurch kann die Molmasse des Emulsionspolymerisats verringert werden. Geeignet sind z.B. Verbindungen mit einer Thiolgruppe wie tert.-Butylmercaptan, Thioglycolsäureethylacrylester, Mercaptoethanol, Mercaptopropyltrimethoxysilan oder tert.-Dodecylmercaptan.

Das Polymerisationsmedium kann sowohl nur aus Wasser, als auch aus Mischungen aus Wasser und damit mischbaren Flüssigkeiten wie Methanol bestehen. Vorzugsweise wird nur Wasser verwendet. Die Emulsionspolymerisation kann sowohl als Batchprozess als auch in Form eines Zulaufverfahrens, einschließlich Stufen- oder Gradientenfahrweise, durchgeführt werden. Bevorzugt ist das Zulaufverfahren, bei dem man einen Teil des Polymerisationsansatzes vorlegt, auf die Polymerisationstemperatur erhitzt, anpolymerisiert und anschließend den Rest des Polymerisationsansatzes kontinuierlich, stufenweise oder unter Überlagerung eines Konzentrationsgefälles unter Aufrechterhaltung der Polymerisation der Polymerisationszone zuführt. Bei der Polymerisation kann auch z.B. zur besseren Einstellung der Teilchengröße eine Polymersaat vorgelegt werden.

Bei der Emulsionspolymerisation werden wässrige Dispersionen des Polymeren in der Regel mit Feststoffgehalten von 15 bis 75 Gew.-%, bevorzugt von 20 bis 70 Gew.% oder von 40 bis 70 Gew.-% erhalten. In einer Ausführungsform enthält die Dispersion bzw. der Haftklebstoff mindestens 60 Gew.% dispergiertes erstes Polymer. Um Feststoffgehalte > 60 Gew.-% erreichen zu können, sollte man eine bi- oder polymodale Teilchengröße einstellen, da sonst die Viskosität zu hoch wird und die Dispersion nicht mehr handhabbar ist. Die Erzeugung einer neuen Teilchengeneration kann beispielsweise durch Zusatz von Saat vor oder während der Emulsionspolymerisation, durch Zugabe überschüssiger Emulgatormengen oder durch Zugabe von Miniemulsionen erfolgen. Ein weiterer Vorteil, der mit der niedrigen Viskosität bei hohem Feststoffgehalt einhergeht, ist das verbesserte Beschichtungsverhalten bei hohen Feststoffgehalten. Die Erzeugung einer oder mehrerer neuer Teilchengenerationen kann zu einem beliebigen Zeitpunkt erfolgen. Er richtet sich nach der für eine niedrige Viskosität angestrebten Teilchengrößenverteilung.

Eine weitere Gruppe von erfindungsgemäß als erstes Polymer einsetzbaren adhäsiven Polymeren sind adhäsive Polyurethane. In Betracht kommt vorzugsweise ein Polyurethan, das überwiegend aus Polyisocyanaten, insbesondere Diisocyanaten, und, als Reaktionspartner, Polyesterdiolen, Polyetherdiolen oder deren Gemische aufgebaut ist. Vorzugsweise ist das Polyurethan zu mindestens 40 Gew.-%, besonders bevorzugt zu mindestens 60 Gew.-% und ganz besonders bevorzugt zu mindestens 80 Gew.-% aus Diisocyanaten, Polyetherdiolen und/oder Polyesterdiolen aufgebaut. Bevorzugt enthält das Polyurethan Polyesterdiole in einer Menge von mehr als 10 Gew.-%, besonders bevorzugt größer 30 Gew. %, insbesondere größer 40 Gew. % oder größer 50 Gew. %, ganz besonders bevorzugt größer 60 Gew. %, bezogen auf das Polyurethan. Insbesondere werden Polyesterdiole als Aufbaukomponenten verwendet. Falls Polyesterdiole im Gemisch mit Polyetherdiolen verwendet werden, handelt es sich vorzugsweise bei mindestens 50 mol %, besonders bevorzugt bei mindestens 80 mol %, ganz besonders bevorzugt bei 100 mol % des Gemischs von Polyester- und Polyetherdiolen um Polyesterdiole.

Vorzugsweise hat das Polyurethan einen Schmelzpunkt größer 30 °C, insbesondere größer 40 °C, besonders bevorzugt größer 50 °C oder auch größer 60 oder größer 70 °C; im Allgemeinen ist der Schmelzpunkt nicht größer als 150 °C, insbesondere nicht größer als 100 °C. Der Schmelzpunkt liegt daher insbesondere in einem Bereich von 30 bis 150 °C, besonders bevorzugt von 40 bis 150, und ganz besonders bevorzugt von 30 bis 100 °C und insbesondere von 50 bis 80 °C. Das Polyurethan hat vorzugsweise eine Schmelzenthalpie von mehr als 20 J/g. Die Messung des Schmelzpunktes und der Schmelzenthalpie erfolgt dabei nach der Methode der Differential Scanning Calorimetry. Die Messung erfolgt an Polyurethanfilmen einer Dicke von 200 µm, die vor der Messung in einem Umluft-Trockenschrank bei 40 °C 72 Stunden getrocknet wurden. Zur Vorbereitung der Messung werden ca. 13 mg des Polyurethans in Pfännchen gefüllt. Die Pfännchen werden verschlossen, die Proben auf 120 °C aufgeheizt, mit 20 K/min abgekühlt und 20 Stunden bei 20 °C getempert. Die so vorbereiteten Proben werden nach der DSC-Methode nach DIN 53765 vermessen, wobei die Probe mit 20 K/min aufgeheizt wird. Als Schmelztemperatur wird die Peaktemperatur gemäß DIN 53765 ausgewertet, die Schmelzenthalpie wird wie in Bild 4 der DIN 53765 ermittelt.

Insgesamt ist das Polyurethan vorzugsweise aufgebaut aus:
a) Diisocyanaten,
b) Diolen, von denen
   b1) 10 bis 100 mol-%, bezogen auf die Gesamtmenge der Diole (b), ein Molekulargewicht von 500 bis 5000 g/mol aufweisen,
   b2) 0 bis 90 mol-%, bezogen auf die Gesamtmenge der Diole (b), ein Molekulargewicht von 60 bis 500 g/mol aufweisen,
c) von den Monomeren (a) und (b) verschiedene Monomere mit wenigstens einer Isocyanatgruppe oder wenigstens einer gegenüber Isocyanatgruppen reaktiven Gruppe, die darüber hinaus wenigstens eine hydrophile Gruppe oder eine potentiell hydrophile Gruppe tragen, wodurch die Wasserdispergierbarkeit der Polyurethane bewirkt wird,
d) gegebenenfalls weiteren von den Monomeren (a) bis (c) verschiedenen mehrwertigen Verbindungen mit reaktiven Gruppen, bei denen es sich um alkoholische Hydroxylgruppen, primäre oder sekundäre Aminogruppen oder Isocyanatgruppen handelt und
e) gegebenenfalls von den Monomeren (a) bis (d) verschiedenen einwertigen Verbindungen mit einer reaktiven Gruppe, bei der es sich um eine alkoholische Hydroxylgruppe, eine primäre oder sekundäre Aminogruppe oder eine Isocyanatgruppe handelt.

Insbesondere zu nennen sind als Monomere (a) Diisocyanate X(NCO)2, wobei X für einen aliphatischen Kohlenwasserstoffrest mit 4 bis 15 Kohlenstoffatomen, einen cycloaliphatischen oder aromatischen Kohlenwasserstoffrest mit 6 bis 15 Kohlenstoffatomen oder einen araliphatischen Kohlenwasserstoffrest mit 7 bis 15 Kohlenstoffatomen steht. Beispiele derartiger Diisocyanate sind Tetramethylendiisocyanat, Hexamethylendiisocyanat, Dodecamethylendiisocyanat, 1,4-Diisocyanatocyclohexan, 1-Isocyanato-3,5,5-trimethyl-5-isocyanatomethylcyclohexan (IPDI), 2,2-Bis-(4-isocyanatocyclohexyl)-propan, Trimethylhexandiisocyanat, 1,4-DÜsocyanatobenzol, 2,4-Diisocyanatotoluol, 2,6-Diisocyanatotoluol, 4,4'-Diisocyanato-diphenylmethan, 2,4'-Diisocyanato-diphenylmethan, p-Xylylendüsocyanat, Tetramethylxylylendiisocyanat (TMXDI), die Isomeren des Bis-(4-isocyanatocyclohexyl)methans (HMDI) wie das trans/trans-, das cis/cis- und das cis/trans-Isomere sowie aus diesen Verbindungen bestehende Gemische. Derartige Diisocyanate sind im Handel erhältlich.

Als Gemische dieser Isocyanate sind besonders die Mischungen der jeweiligen Strukturisomeren von Diisocyanatotoluol und Diisocyanato-diphenylmethan von Bedeutung, insbesondere ist die Mischung aus 80 mol-% 2,4-Diisocyanatotoluol und 20 mol-% 2,6-Diisocyanatotoluol geeignet. Weiterhin sind die Mischungen von aromatischen Isocyanaten wie 2,4-Diisocyanatotoluol und/oder 2,6-Diisocyanatotoluol mit aliphatischen oder cycloaliphatischen Isocyanaten wie Hexamethylendiisocyanat oder IPDI besonders vorteilhaft, wobei das bevorzugte Mischungsverhältnis der aliphatischen zu aromatischen Isocyanate 4 : 1 bis 1 : 4 beträgt.

Zum Aufbau der Polyurethane kann man als Verbindungen außer den vorgenannten auch Isocyanate einsetzen, die neben den freien Isocyanatgruppen weitere verkappte Isocyanatgruppen, z. B. Uretdiongruppen tragen.

Im Hinblick auf gute Filmbildung und Elastizität kommen als Diole (b) vornehmlich höhermolekulare Diole (b1) in Betracht, die ein Molekulargewicht von etwa 500 bis 5000, vorzugsweise von etwa 1000 bis 3000 g/mol haben. Es handelt sich hierbei um das zahlenmittlere Molgewicht Mn. Mn ergibt sich durch Bestimmung der Anzahl der Endgruppen (OH-Zahl). Bei den Diolen (b1) kann es sich um Polyesterpolyole handeln, die z. B. aus Ullmanns Enzyklopädie der technischen Chemie, 4. Auflage, Band 19, S. 62 bis 65 bekannt sind. Bevorzugt werden Polyesterpolyole eingesetzt, die durch Umsetzung von zweiwertigen Alkoholen mit zweiwertigen Carbonsäuren erhalten werden. Anstelle der freien Polycarbonsäuren können auch die entsprechenden Polycarbonsäureanhydride oder entsprechende Polycarbonsäureester von niederen Alkoholen oder deren Gemische zur Herstellung der Polyesterpolyole verwendet werden. Die Polycarbonsäuren können aliphatisch, cycloaliphatisch, araliphatisch, aromatisch oder heterocyclisch sein und gegebenenfalls, z. B. durch Halogenatome, substituiert und/oder ungesättigt sein. Als Beispiele hierfür seien genannt: Korksäure, Azelainsäure, Phthalsäure, Isophthalsäure, Phthalsäureanhydrid, Tetrahydrophthalsäureanhydrid, Hexahydrophthalsäureanhydrid, Tetrachlorphthalsäureanhydrid, Endomethylentetrahydrophthalsäureanhydrid, Glutarsäureanhydrid, Maleinsäure, Maleinsäureanhydrid, Fumarsäure, dimere Fettsäuren. Bevorzugt sind Dicarbonsäuren der allgemeinen Formel HOOC- (CH2)y-COOH, wobei y eine Zahl von 1 bis 20, bevorzugt eine gerade Zahl von 2 bis 20 ist, z.B. Bernsteinsäure, Adipinsäure, Sebacinsäure und Dodecandicarbonsäure.

Als mehrwertige Alkohole kommen z. B. Ethylenglykol, Propan-1,2-diol, Propan-1,3-diol, Butan-1,3-diol, Buten-1,4-diol, Butin-1,4-diol, Pentan-1,5-diol, Neopentylglykol, Bis-(hydroxymethyl)-cyclohexane wie 1,4-Bis-(hydroxymethyl)cyclohexan, 2-Methylpropan-1,3-diol, Methylpentandiole, ferner Diethylenglykol, Triethylenglykol, Tetraethylenglykol, Polyethylenglykol, Dipropylenglykol, Polypropylenglykol, Dibutylenglykol und Polybutylenglykole in Betracht. Bevorzugt sind Alkohole der allgemeinen Formel HO-(CH2)x-OH, wobei x eine Zahl von 1 bis 20, bevorzugt eine gerade Zahl von 2 bis 20 ist. Beispiele hierfür sind Ethylenglycol, Butan-1,4-diol, Hexan-1,6-diol, Octan-1,8-diol und Dodecan-1,12-diol. Weiterhin bevorzugt ist Neopentylglykol.

Ferner kommen gegebenenfalls auch Polycarbonat-Diole, wie sie z. B. durch Umsetzung von Phosgen mit einem Überschuss von den als Aufbaukomponenten für die Polyesterpolyole genannten niedermolekularen Alkohole erhalten werden können, in Betracht.

Gegebenenfalls können auch Polyesterdiole auf Lacton-Basis mit verwendet werden, wobei es sich um Homo- oder Mischpolymerisate von Lactonen, bevorzugt um endständige Hydroxylgruppen aufweisende Anlagerungsprodukte von Lactonen an geeignete difunktionelle Startermoleküle handelt. Als Lactone kommen bevorzugt solche in Betracht, die sich von Verbindungen der allgemeinen Formel HO-(CH₂)z-COOH ableiten, wobei z eine Zahl von 1 bis 20 ist und ein H-Atom einer Methyleneinheit auch durch einen C₁- bis C₄-Alkylrest substituiert sein kann. Beispiele sind e-Caprolacton, β-Propiolacton, g-Butyrolacton und/oder Methyl-e-caprolacton sowie deren Gemische. Geeignete Starterkomponenten sind z. B. die vorstehend als Aufbaukomponente für die Polyesterpolyole genannten niedermolekularen zweiwertigen Alkohole. Die entsprechenden Polymerisate des e-Caprolactons sind besonders bevorzugt. Auch niedere Polyesterdiole oder Polyetherdiole können als Starter zur Herstellung der Lacton-Polymerisate eingesetzt sein. Anstelle der Polymerisate von Lactonen können auch die entsprechenden, chemisch äquivalenten Polykondensate der den Lactonen entsprechenden Hydroxycarbonsäuren, eingesetzt werden.

Polyetherdiole sind insbesondere durch Polymerisation von Ethylenoxid, Propylenoxid, Butylenoxid, Tetrahydrofuran, Styroloxid oder Epichlorhydrin mit sich selbst, z. B. in Gegenwart von BF3 oder durch Anlagerung dieser Verbindungen gegebenenfalls im Gemisch oder nacheinander, an Startkomponenten mit reaktionsfähigen Wasserstoffatomen, wie Alkohole oder Amine, z. B. Wasser, Ethylenglykol, Propan-1,2-diol, Propan-1,3-diol, 2,2-Bis(4-hydroxyphenyl)-propan oder Anilin erhältlich. Besonders bevorzugt sind Polypropylenoxid, Polytetrahydrofuran eines Molekulargewichts von 240 bis 5000, und vor allem 500 bis 4500.

Unter b1) fallen nur Polyetherdiole, die zu weniger als 20 Gew.-% aus Ethylenoxid bestehen. Polyetherdiole mit mindestens 20 Gew.-% sind hydrophile Polyetherdiole, welche zu Monomeren c) zählen. Gegebenenfalls können auch Polyhydroxyolefine mit verwendet werden, bevorzugt solche mit 2 endständigen Hydroxylgruppen, z. B. α,-ω-Dihydroxypolybutadien, α,-ω-Dihydroxypolymethacrylester oder α,-ω-Dihydroxypolyacrylester als Monomere (c1). Solche Verbindungen sind beispielsweise aus der EP-A 622 378 bekannt. Weitere geeignete Polyole sind Polyacetale, Polysiloxane und Alkydharze.

Bevorzugt handelt es sich bei mindestens 30 mol % , besonders bevorzugt bei mindestens 70 mol % der Diole b1) um Polyesterdiole. Besonders bevorzugt werden als Diole b1) ausschließlich Polyesterdiole verwendet.

Die Härte und der Elastizitätsmodul der Polyurethane lassen sich erhöhen, wenn als Diole (b) neben den Diolen (b1) noch niedermolekulare Diole (b2) mit einem Molekulargewicht von etwa 60 bis 500, vorzugsweise von 62 bis 200 g/mol, eingesetzt werden. Als Monomere (b2) werden vor allem die Aufbaukomponenten der für die Herstellung von Polyesterpolyolen genannten kurzkettigen Alkandiole eingesetzt, wobei die unverzweigten Diole mit 2 bis 12 C-Atomen und einer geradzahligen Anzahl von C-Atomen sowie Pentan-1,5-diol und Neopentylglykol bevorzugt werden. Als Diole b2) kommen z. B. Ethylenglykol, Propan-1,2-diol, Propan-1,3-diol, Butan-1,3-diol, Buten-1,4-diol, Butin-1,4-diol, Pentan-1,5-diol, Neopentylglykol, Bis-(hydroxymethyl)-cyclohexane wie 1,4-Bis-(hydroxymethyl)cyclohexan, 2-Methyl-propan-1,3-diol, Methylpentandiole, ferner Diethylenglykol, Triethylenglykol, Tetraethylenglykol, Polyethylenglykol, Dipropylenglykol, Polypropylenglykol, Dibutylenglykol und Polybutylenglykole in Betracht. Bevorzugt sind Alkohole der allgemeinen Formel HO-(CH₂)x-OH, wobei x eine Zahl von 1 bis 20, bevorzugt eine gerade Zahl von 2 bis 20 ist. Beispiele hierfür sind Ethylenglycol, Butan-1,4-diol, Hexan-1,6-diol, Octan-1,8-diol und Dodecan-1,12-diol. Weiterhin bevorzugt ist Neopentylglykol.

Bevorzugt beträgt der Anteil der Diole (b1), bezogen auf die Gesamtmenge der Diole (b) 10 bis 100 mol-% und der Anteil der Monomere (b2), bezogen auf die Gesamtmenge der Diole (b) 0 bis 90 mol-%. Besonders bevorzugt beträgt das Verhältnis der Diole (b1) zu den Monomeren (b2) 0,1 : 1 bis 5:1, besonders bevorzugt 0,2 : 1 bis 2 : 1.

Um die Wasserdispergierbarkeit der Polyurethane zu erreichen, enthalten die Polyurethane vorzugsweise von den Komponenten (a), (b) und (d) verschiedene Monomere (c), die wenigstens eine Isocyanatgruppe oder wenigstens eine gegenüber Isocyanatgruppen reaktive Gruppe und darüber hinaus wenigstens eine hydrophile Gruppe oder eine Gruppe, die sich in eine hydrophile Gruppe überführen lässt, tragen, als Aufbaukomponente. Im folgenden Text wird der Begriff "hydrophile Gruppen oder potentiell hydrophile Gruppen" mit "(potentiell) hydrophile Gruppen" abgekürzt. Die (potentiell) hydrophilen Gruppen reagieren mit Isocyanaten wesentlich langsamer als die funktionellen Gruppen der Monomere, die zum Aufbau der Polymerhauptkette dienen. Der Anteil der Komponenten mit (potentiell) hydrophilen Gruppen an der Gesamtmenge der Komponenten (a), (b), (c), (d) und (e) wird im allgemeinen so bemessen, dass die Molmenge der (potentiell) hydrophilen Gruppen, bezogen auf die Gewichtsmenge aller Monomere (a) bis (e), 30 bis 1000, bevorzugt 50 bis 500 und besonders bevorzugt 80 bis 300 mmol/kg beträgt. Bei den (potentiell) hydrophilen Gruppen kann es sich um nichtionische oder bevorzugt um (potentiell) ionische hydrophile Gruppen handeln.

Als nichtionische hydrophile Gruppen kommen insbesondere Polyethylenglycolether aus vorzugsweise 5 bis 100, bevorzugt 10 bis 80 Ethylenoxid-Wiederholungseinheiten, in Betracht. Der Gehalt an Polyethylenoxid-Einheiten beträgt im allgemeinen 0 bis 10, bevorzugt 0 bis 6 Gew.-%, bezogen auf die Gewichtsmenge aller Monomere (a) bis (e). Bevorzugte Monomere mit nichtionischen hydrophilen Gruppen sind Polyethylenoxiddiole mit mindestens 20 Gew.-% Ethylenoxid, Polyethylenoxidmonoole sowie die Reaktionsprodukte aus einem Polyethylenglykol und einem Diisocyanat, die eine endständig veretherten Polyethylenglykolrest tragen. Derartige Diisocyanate sowie Verfahren zu deren Herstellung sind in den Patentschriften US-A 3,905,929 und US-A 3,920,598 angegeben.

Ionische hydrophile Gruppen sind vor allem anionische Gruppen wie die Sulfonat-, die Carboxylat- und die Phosphatgruppe in Form ihrer Alkalimetall- oder Ammoniumsalze sowie kationische Gruppen wie Ammoniumgruppen, insbesondere protonierte tertiäre Aminogruppen oder quartäre Ammoniumgruppen. Potentiell ionische hydrophile Gruppen sind vor allem solche, die sich durch einfache Neutralisations-, Hydrolyse- oder Quaternisierungsreaktionen in die oben genannten ionischen hydrophilen Gruppen überführen lassen, also z. B. Carbonsäuregruppen oder tertiäre Aminogruppen. (Potentiell) ionische Monomere (c) sind z. B. in Ullmanns Enzyklopädie der technischen Chemie, 4. Auflage, Band 19, S.311-313 und beispielsweise in der DE-A 1 495 745 ausführlich beschrieben.

Als (potentiell) kationische Monomere (c) sind vor allem Monomere mit tertiären Aminogruppen von besonderer praktischer Bedeutung, beispielsweise: Tris-(hydroxyalkyl)-amine, N,N'-Bis(hydroxyalkyl)-alkylamine, N-Hydroxyalkyl-dialkylamine, Tris-(aminoalkyl)-amine, N,N'-Bis(aminoalkyl)-alkylamine, N-Aminoalkyl-dialkylamine, wobei die Alkylreste und Alkandiyl-Einheiten dieser tertiären Amine unabhängig voneinander aus 1 bis 6 Kohlenstoffatomen bestehen. Weiterhin kommen tertiäre Stickstoffatome aufweisende Polyether mit vorzugsweise zwei endständigen Hydroxylgruppen, wie sie z. B. durch Alkoxylierung von zwei an Aminstickstoff gebundene Wasserstoffatome aufweisende Amine, z. B. Methylamin, Anilin oder N,N'-Dimethylhydrazin, in an sich üblicher Weise zugänglich sind, in Betracht. Derartige Polyether weisen im Allgemeinen ein zwischen 500 und 6000 g/mol liegendes Molgewicht auf. Diese tertiären Amine werden entweder mit Säuren, bevorzugt starken Mineralsäuren wie Phosphorsäure, Schwefelsäure, Halogenwasserstoffsäuren oder starken organischen Säuren oder durch Umsetzung mit geeigneten Quaternisierungsmitteln wie C₁- bis C₆-Alkylhalogeniden oder Benzylhalogeniden, z. B. Bromiden oder Chloriden, in die Ammoniumsalze überführt.

Als Monomere mit (potentiell) anionischen Gruppen kommen üblicherweise aliphatische, cycloaliphatische, araliphatische oder aromatische Carbonsäuren und Sulfonsäuren in Betracht, die mindestens eine alkoholische Hydroxylgruppe oder mindestens eine primäre oder sekundäre Aminogruppe tragen. Bevorzugt sind Dihydroxyalkylcarbonsäuren, vor allem mit 3 bis 10 Kohlenstoffatomen, wie sie auch in der US-A 3,412,054 beschrieben sind.

Insbesondere sind Verbindungen der allgemeinen Formel (c1) 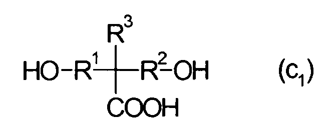 in welcher R¹ und R² für eine C₁- bis C₄-Alkandiyl-(Einheit) und R³ für eine C₁- bis C₄-Alkyl-(Einheit) steht und vor allem Dimethylolpropionsäure (DMPA) bevorzugt. Weiterhin eignen sich entsprechende Dihydroxysulfonsäuren und Dihydroxyphosphonsäuren wie 2,3-Dihydroxypropanphosphonsäure.

Ansonsten geeignet sind Dihydroxylverbindungen mit einem Molekulargewicht über 500 bis 10000 g/mol mit mindestens 2 Carboxylatgruppen, die aus der DE-A 39 11 827 bekannt sind. Sie sind durch Umsetzung von Dihydroxylverbindungen mit Tetracarbonsäuredianhydriden wie Pyromellitsäuredianhydrid oder Cyclopentantetracarbonsäuredianhydrid im Molverhältnis 2 : 1 bis 1,05 : 1 in einer Polyadditionsreaktion erhältlich. Als Dihydroxylverbindungen sind insbesondere die als Kettenverlängerer aufgeführten Monomere (b2) sowie die Diole (b1) geeignet.

Als Monomere (c) mit gegenüber Isocyanaten reaktiven Aminogruppen kommen Aminocarbonsäuren wie Lysin, β-Alanin oder die in der DE-A 20 34 479 genannten Addukte von aliphatischen diprimären Diaminen an a,ß-ungesättigte Carbon- oder Sulfonsäuren in Betracht. Besonders bevorzugte Verbindungen sind die N-(2-Aminoethyl)-2-aminoethancarbonsäure sowie die N-(2-Aminoethyl)-2-aminoethansulfonsäure bzw. die entsprechenden Alkalisalze, wobei Na als Gegenion besonders bevorzugt ist. Weiterhin besonders bevorzugt sind die Addukte der oben genannten aliphatischen diprimären Diamine an 2-Acrylamido-2-methylpropansulfonsäure, wie sie z. B. in der DE-B 1 954 090 beschrieben sind.

Sofern Monomere mit potentiell ionischen Gruppen eingesetzt werden, kann deren Überführung in die ionische Form vor, während, jedoch vorzugsweise nach der Isocyanat-Polyaddition erfolgen, da sich die ionischen Monomeren in der Reaktionsmischung häufig nur schwer lösen. Neutralisierungsmittel sind z. B. Ammoniak, NaOH, Triethanolamin (TEA) Trüsopropylamin (TIPA) oder Morpholin, bzw. dessen Derivate. Besonders bevorzugt liegen die Sulfonat- oder Carboxylatgruppen in Form ihrer Salze mit einem Alkaliion oder einem Ammoniumion als Gegenion vor. Das Polyurethan enthält vorzugsweise anionische Gruppen, insbesondere Sulfonatgruppen und besonders bevorzugt Carboxylatgruppen.

Die Monomere (d), die von den Monomeren (a) bis (c) verschieden sind und welche gegebenenfalls auch Bestandteile des Polyurethans sind, dienen im Allgemeinen der Vernetzung oder der Kettenverlängerung. Es sind im allgemeinen mehr als zweiwertige nicht-phenolische Alkohole, Amine mit 2 oder mehr primären und/oder sekundären Aminogruppen sowie Verbindungen, die neben einer oder mehreren alkoholischen Hydroxylgruppen eine oder mehrere primäre und/oder sekundäre Aminogruppen tragen. Alkohole mit einer höheren Wertigkeit als 2, die zur Einstellung eines gewissen Verzweigungs- oder Vernetzungsgrades dienen können, sind z. B. Trimethylolpropan, Glycerin oder Zucker. Ferner kommen Monoalkohole in Betracht, die neben der Hydroxylgruppe eine weitere gegenüber Isocyanaten reaktive Gruppe tragen wie Monoalkohole mit einer oder mehreren primären und/oder sekundären Aminogruppen, z. B. Monoethanolamin.

Polyamine mit 2 oder mehr primären und/oder sekundären Aminogruppen werden vor allem dann eingesetzt, wenn die Kettenverlängerung bzw. Vernetzung in Gegenwart von Wasser stattfinden soll, da Amine in der Regel schneller als Alkohole oder Wasser mit Isocyanaten reagieren. Das ist häufig dann erforderlich, wenn wässerige Dispersionen von vernetzten Polyurethanen oder Polyurethanen mit hohem Molgewicht gewünscht werden. In solchen Fällen geht man so vor, dass man Prepolymere mit Isocyanatgruppen herstellt, diese rasch in Wasser dispergiert und anschließend durch Zugabe von Verbindungen mit mehreren gegenüber Isocyanaten reaktiven Aminogruppen kettenverlängert oder vernetzt. Hierzu geeignete Amine sind im allgemeinen polyfunktionelle Amine des Molgewichtsbereiches von 32 bis 500 g/mol, vorzugsweise von 60 bis 300 g/mol, welche mindestens zwei Aminogruppen, ausgewählt aus der Gruppe der primären und sekundären Aminogruppen, enthalten. Beispiele hierfür sind Diamine wie Diaminoethan, Diaminopropane, Diaminobutane, Diaminohexane, Piperazin, 2,5-Dimethylpiperazin, Amino-3-aminomethyl-3,5,5-trimethyl-cyclohexan (Isophorondiamin, IPDA), 4,4'-Diaminodicyclohexylmethan, 1,4-Diaminocyclohexan, Aminoethylethanolamin, Hydrazin, Hydrazinhydrat oder Triamine wie Diethylentriamin oder 1,8-Diamino-4-aminomethyloctan.

Die Amine können auch in blockierter Form, z. B. in Form der entsprechenden Ketimine (siehe z. B. CA-A 1 129 128), Ketazine (vgl. z. B. die US-A 4,269,748) oder Aminsalze (s. US-A 4,292,226) eingesetzt werden. Auch Oxazolidine, wie sie beispielsweise in der US-A 4,192,937 verwendet werden, stellen verkappte Polyamine dar, die für die Herstellung der erfindungsgemäßen Polyurethane zur Kettenverlängerung der Prepolymeren eingesetzt werden können. Bei der Verwendung derartiger verkappter Polyamine werden diese im allgemeinen mit den Prepolymeren in Abwesenheit von Wasser vermischt und diese Mischung anschließend mit dem Dispersionswasser oder einem Teil des Dispersionswassers vermischt, so dass hydrolytisch die entsprechenden Polyamine freigesetzt werden. Bevorzugt werden Gemische von Di- und Triaminen verwendet, besonders bevorzugt Gemische von Isophorondiamin (IPDA) und Diethylentriamin (DETA). Die Polyurethane enthalten bevorzugt 1 bis 30, besonders bevorzugt 4 bis 25 mol-%, bezogen auf die Gesamtmenge der Komponenten (b) und (d) eines Polyamins mit mindestens 2 gegenüber Isocyanaten reaktiven Aminogruppen als Monömere (d).

Für den gleichen Zweck können auch als Monomere (d) höher als zweiwertige Isocyanate eingesetzt werden. Handelsübliche Verbindungen sind beispielsweise das Isocyanurat oder das Biuret des Hexamethylendiisocyanats.

Monomere (e), die gegebenenfalls mit verwendet werden, sind Monoisocyanate, Monoalkohole und monoprimäre und -sekundäre Amine. Im Allgemeinen beträgt ihr Anteil maximal 10 mol-%, bezogen auf die gesamte Molmenge der Monomere. Diese monofunktionellen Verbindungen tragen üblicherweise weitere funktionelle Gruppen wie olefinische Gruppen oder Carbonylgruppen und dienen zur Einführung von funktionellen Gruppen in das Polyurethan, die die Dispergierung bzw. die Vernetzung oder weitere polymeranaloge Umsetzung des Polyurethans ermöglichen. In Betracht kommen hierfür Monomere wie Isopropenyl-a,a-dimethylbenzylisocyanat (TMI) und Ester von Acryl- oder Methacrylsäure wie Hydroxyethylacrylat oder Hydroxyethylmethacrylat.

Auf dem Gebiet der Polyurethanchemie ist allgemein bekannt, wie das Molekulargewicht der Polyurethane durch Wahl der Anteile der miteinander reaktiven Monomere sowie des arithmetischen Mittels der Zahl der reaktiven funktionellen Gruppen pro Molekül eingestellt werden kann. Normalerweise werden die Komponenten (a) bis (e) sowie ihre jeweiligen Molmengen so gewählt, dass das Verhältnis A : B mit

| | |
|---|---|
| A | der Molmenge an Isocyanatgruppen und |
| B | der Summe aus der Molmenge der Hydroxylgruppen und der Molmenge der funktionellen Gruppen, die mit Isocyanaten in einer Additionsreaktion reagieren können, |

0,5 : 1 bis 2 : 1, bevorzugt 0,8 : 1 bis 1,5, besonders bevorzugt 0,9 : 1 bis 1,2 : 1 beträgt. Ganz besonders bevorzugt liegt das Verhältnis A : B möglichst nahe an 1 : 1.

Die eingesetzten Monomere (a) bis (e) tragen im Mittel üblicherweise 1,5 bis 2,5, bevorzugt 1,9 bis 2,1, besonders bevorzugt 2,0 Isocyanatgruppen bzw. funktionelle Gruppen, die mit Isocyanaten in einer Additionsreaktion reagieren können.

Die Herstellung von Polyurethanen, bzw. von wässrigen Polyurethandispersionen ist dem Fachmann bekannt. Die Polyurethane liegen vorzugsweise als wässrige Dispersion vor und werden in dieser Form verwendet.

Die erfindungsgemäß einzusetzenden ersten Polymere werden vorzugsweise in Form einer wässrigen Dispersion verwendet. Die mittlere Teilchengröße der in der wässrigen Dispersion dispergierten Polymerteilchen des ersten Polymers beträgt vorzugsweise von 100 bis 500 nm. Besonders bevorzugt liegt die mittlere Teilchengröße zwischen 140 und 200 nm. Die Größenverteilung der Dispersionsteilchen kann monomodal, bimodal oder multimodal sein. Bei monomodaler Teilchengrößenverteilung ist die mittlere Teilchengröße der in der wässrigen Dispersion dispergierten Polymerteilchen vorzugsweise kleiner 400 nm, insbesondere kleiner 200 nm. Bei bi- oder multimodaler Teilchengrößenverteilung kann die Teilchengröße auch bis zu 1000 nm betragen. Unter mittlerer Teilchengröße wird hier der d₅₀-Wert der Teilchengrößenverteilung verstanden, d.h. 50 Gew.-% der Gesamtmasse aller Teilchen haben einen kleineren Teilchendurchmesser als der d₅₀-Wert. Die Teilchengrößenverteilung kann in bekannter Weise mit der analytischen Ultrazentrifuge (W. Mächtle, Makromolekulare Chemie 185 (1984), Seite 1025 - 1039) bestimmt werden.

Das erste Polymer verfilmt nach Auftragen auf einem Substrat und Trocknung. Das heißt, dass z.B. ursprünglich dispergierte Polymerisatpartikel nach Trocknung nicht mehr partikulär vorliegen, sondern auf dem Substrat wie z.B. Glas einen Film bilden.

Die Zusammensetzung enthält mindestens ein zweites organisches Polymer. Dieses Polymer ist nicht adhäsiv, d.h. es ist, wenn es alleine eingesetzt wird, nicht in der Lage, Werkstücke durch Adhäsionskräfte und Kohäsion zu verbinden. Bevorzugte zweite Polymere sind erhältlich durch radikalische Polymerisation von ethylenisch ungesättigten Verbindungen (Monomeren).

Das zweite Polymer besteht vorzugsweise zu mindestens 40 Gew.% oder zu mindestens 60 Gew.%, oder zu mindestens 80 Gew.%, besonders bevorzugt zu mindestens 90 Gew.% aus Hauptmonomeren, welche, wenn sie als Homopolymere vorliegen, eine Glasübergangstemperatur von mindestens 50°C aufweisen. Sie können mit Comonomeren, welche, wenn sie als Homopolymere vorliegen, eine Glasübergangstemperatur von kleiner 50°C aufweisen, in einer Menge copolymerisiert sein, sodass die Glasübergangstemperatur des Copolymers mindestens 50°C beträgt.

Die Hauptmonomeren sind vorzugsweise ausgewählt aus Vinylaromaten, insbesondere solchen mit bis zu 12 C-Atomen, z.B. Styrol, α-Methylstyrol und/oder Vinyltoluol. Aus dieser Gruppe von Monomeren wird vorzugsweise Styrol verwendet. Weitere Monomere sind z.B. Methacrylsäureester, Acrylnitril, Methacrylnitril, Acrylamid und Methacrylamid oder Mischungen dieser Monomeren. Geeignete Methacrylsäureester sind z.B. tert.-Butylmethacrylat, Isobutylmethacrylat, Ethylmethacrylat oder Methylmethacrylat.

In einer Ausführungsform bestehen die Polymerpartikel des zweiten organischen Polymers im Wesentlichen, d.h. zu mindestens 90 Gew.%, zu mindestens 95 Gew.% oder zu 100 Gew.% aus Vinylaromaten, insbesondere aus Styrol.

Der Gehalt an zweitem organischem Polymer in der Klebstoffzusammensetzung ist vorzugsweise 5 bis 25 Gew.%, bezogen auf den Gesamtfeststoffgehalt, insbesondere maximal 15 Gew.%, z.B. von 10 bis 15 Gew.%. Das zweite organische Polymer liegt in der Klebstoffzusammensetzung in Form von festen, dispergierten Nanopartikeln vor. Die mittlere Teilchengröße ist maximal 50 nm oder maximal 40 nm, z.B. von 10 bis 40 nm und kann wie oben beschrieben bestimmt werden. Die Glasübergangstemperatur des zweiten organischen Polymers beträgt größer oder gleich 50°C, vorzugsweise größer oder gleich 70 °C oder größer oder gleich 80°C oder mindestens 100°C. Das zweite organische Polymer verfilmt nicht nach Auftragen auf einem Substrat und Trocknung. Das heißt, dass die dispergierten Polymerisatpartikel auch nach Trocknung noch partikulär vorliegen und auf dem Substrat wie z.B. Glas keinen Film bilden und nicht mit dem filmbildenden ersten organischen Polymer verlaufen. Dies ist z.B. durch mikroskopische Untersuchungen feststellbar.

Der Unterschied der Glasübergangstemperaturen zwischen erstem und zweitem organischen Polymer ist mindestens 50°C, vorzugsweise mindestens 70°C, mindestens 80°C oder mindestens 100°C.

Das erste Polymer liegt in der erfindungsgemäßen Klebstoffzusammensetzung in dem Lösungsmittel gelöst oder dispergiert vor. Das zweite Polymer liegt in dispergierter Form vor. Das Lösungsmittel der Klebstoffzusammensetzung kann sowohl nur aus Wasser, als auch aus Mischungen aus Wasser und damit mischbaren Flüssigkeiten wie Methanol oder Ethanol bestehen. Vorzugsweise wird nur Wasser verwendet. Der pH-Wert der Polymerdispersion bzw. der Klebstoffzusammensetzung wird vorzugsweise auf pH größer 4,5, insbesondere auf einen pH-Wert zwischen 5 und 8 eingestellt.

Die Haftklebstoffzusammensetzungen können allein aus dem Lösungsmittel und dem ersten und zweiten organischen Polymer bestehen. Die Klebstoffzusammensetzung kann jedoch auch noch weitere Zusatzstoffe enthalten, z.B. Füllstoffe, Farbstoffe, Verlaufsmittel, Verdicker (vorzugsweise Assoziativverdicker), Entschäumer, Weichmacher, Pigmente, Netzmittel oder Tackifier (klebrigmachende Harze). Für eine bessere Benetzung von Oberflächen können die Klebstoffe Benetzungshilfsmittel, z. B. Fettalkoholethoxylate, Alkylphenolethoxylate, Nonylphenolethoxylate, Polyoxyethylene, Polyoxypropylene oder Natriumdodecylsulfonate enthalten. Die Menge an Zusatzstoffen beträgt im allgemeinen 0,05 bis 5 Gew.-Teile, insbesondere 0,1 bis 3 Gew.-Teile auf 100 Gew.-Teile Polymer (fest).

In einer Ausführungsform handelt es sich bei der erfindungsgemäßen Klebstoffzusammensetzung um eine wässrige Dispersion mit Gehalt an
(a) 20 bis 70 Gew.% eines adhäsiven Emulsionspolymerisats mit einer Glasübergangstemperatur von -60 bis -10 °C als erstem Polymer, erhältlich durch radikalische Polymerisation und aufgebaut zu mindestens 40 Gew.-% aus Hauptmonomeren, welche ausgewählt sind aus der Gruppe bestehend aus C1 bis C20 Alkyl(meth)acrylaten, Vinylestern von bis zu 20 C-Atome enthaltenden Carbonsäuren, Vinylaromaten mit bis zu 20 C-Atomen, ethylenisch ungesättigten Nitrilen, Vinylhalogeniden, Vinylethern von 1 bis 10 C Atome enthaltenden Alkoholen, aliphatischen Kohlenwasserstoffen mit 2 bis 8 C Atomen und ein oder zwei Doppelbindungen und Mischungen dieser Monomeren; und
(b) 5 bis 25 Gew.% an partikelförmigem, festen zweiten Polymer mit einer Glasübergangstemperatur von größer oder gleich 70 °C und einer mittleren Teilchengröße der Polymerpartikel von 10 bis 40 nm.

Die erfindungsgemäße Klebstoffzusammensetzung ist vorzugsweise ein Haftklebstoff. Ein Haftklebstoff ist ein viskoelastischer Klebstoff, dessen abgebundener Film bei Raumtemperatur (20°C) in trockenem Zustand permanent klebrig und klebfähig bleibt. Die Klebung auf Substraten erfolgt sofort durch leichten Anpressdruck.

Die erfindungsgemäße Klebstoffzusammensetzung kann zur Herstellung von selbstklebenden Artikeln verwendet werden. Vorzugsweise sind die selbstklebenden Artikel nach der Verklebung wiederabziehbar. Bei den selbstklebenden Artikeln kann es sich z.B. um Folien, Bänder oder Etiketten handeln.

Bei erfindungsgemäßen selbstklebenden Folien handelt es sich bevorzugt um eine mit dem Klebstoff einseitig beschichtete thermoplastische Folie. In Betracht kommen geeignete Polymerfolien, wie Folien aus Polyolefinen, z.B. Polyethylen, Polypropylen, Polyolefincopolymeren, Folien aus Polyestern oder Polyacetat. Es kann sich auch um einen Folienverbund aus unterschiedlichen Polymerfolien handeln. Gegebenenfalls kann auch auf die Oberfläche der Folie ein Haftvermittler aufgebracht werden, um die Haftung der Klebstoffschicht zu verbessern. Bei erfindungsgemäßen selbstklebenden Bändern kann es sich um einseitig oder beidseitig beschichtete Bänder aus den obigen Substanzen handeln. Bei erfindungsgemäßen selbstklebenden Etiketten kann es sich um Etiketten aus Papier oder einer thermoplastischen Folie handeln. Als thermoplastische Folie kommen die oben aufgeführten Polymerfolien in Betracht. Die Etiketten sind einseitig mit Klebstoff beschichtet. Bevorzugte Substrate für die selbstklebenden Artikel sind Papier und Polymerfolien. Bevorzugte selbstklebende Artikel sind Papieretiketten, Folienetiketten, Klebebänder und Klebefolien.

Die Artikel sind auf mindestens einer Oberfläche zumindest teilweise mit einer erfindungsgemäßen Klebstoffzusammensetzung beschichtet. Der Klebstoff kann nach üblichen Methoden wie Rakeln oder Streichen auf die Artikel aufgetragen werden. Die Auftragsmenge beträgt bevorzugt 0,1 bis 20 g, besonders bevorzugt 2 bis 15 g Feststoff pro m². Nach dem Auftragen folgt im Allgemeinen ein Trocknungsschritt zur Entfernung des Wasser bzw. der Lösungsmittel.

Bei den Substraten, auf welche die selbstklebenden Artikel vorteilhaft aufgebracht werden können, kann es sich z.B. um Metall, Holz, Glas, Papier oder Kunststoff handeln. Die selbstklebenden Artikel eignen sich insbesondere zum Verkleben auf Verpackungsoberflächen, Kartons, Kunststoffverpackungen, Bücher, Fenster, Kraftfahrzeugkarosserien oder Karosserieteilen. Die selbstklebenden Artikel können von den Gegenständen von Hand wieder abgezogen werden, ohne dass ein Klebstoffrückstand auf dem Gegenstand verbleibt. Die Haftung auf den Gegenständen ist gut, trotzdem lassen sich die Folien, Bänder und Etiketten leicht abziehen. Die gute Wiederabziehbarkeit ist auch noch nach längerer Zeit gegeben.

### Beispiele

### Beispiel 1

Es wird ein wiederabziehbares Haftklebstoffetikett hergestellt aus einem Polyethylenfilm einer Streifenbreite von 25mm, welche mit 19 g/m² einer Klebstoffzusammensetzung beschichtet wird.

Bei der Klebstoffzusammensetzung handelt es sich um Acronal^{®} DS 3588, in welchem organische Nanopartikel in einem Gewichtsverhältnis von 80 Teilen Acronal DS 3588 zu 20 Teilen Nanopartikel dispergiert werden. Bei den organischen Nanopartikeln handelt es sich um Polystyrolpartikel einer mittleren Teilchengröße von 25-30 nm und einer Glasübergangstemperatur von größer 80°C. Acronal^{®} DS 3588 ist eine Dispersion eines Acrylatpolymers mit einem Feststoffgehalt von 51 % und einer Glasübergangstemperatur von kleiner -10°. Das Acrylatpolymer ist ein Copolymer aus Butylacrylat, Ethylhexylacrylat, Methylacrylat, Styrol und Acrylsäure.

### Beispiel 2 (Vergleich)

Zum Vergleich wurde ein wiederabziehbares Haftklebstoffetikett wie Beispiel 1 ohne die organischen Nanopartikel hergestellt.

### Untersuchungsmethode

Die Wiederabziehbarkeit (Peel Test, Schälfestigkeit) wird wie folgt untersucht. Die Schälfestigkeit ist die Kraft, die ein auf ein Trägermaterial aufgebrachter Klebstoff bei einer definierten Abzugsgeschwindigkeit dem Abziehen vom Substrat entgegensetzt.

Der zu prüfende Klebstoff wird mittels eines geeigneten Laborbeschichtungstisches in der gewünschten Schichtdicke auf das Trägermaterial aufgetragen und 3 Minuten bei 90° C im Umlufttrockenschrank getrocknet. Die Kleberseite des beschichteten Trägermaterials wird mit Trennpapier abgedeckt Aus der fertigen Beschichtung werden Prüfstreifen in Beschichtungsrichtung in einer Breite von 25 mm ausgeschnitten und mindestens 16 Stunden bei Normklima (23° C, 50% relative Luftfeuchte) gelagert.

Das Trennpapier wird vom Prüfstreifen abgezogen, der Prüfstreifen mit Hilfe einer gummibeschichteten Kaschierrolle blasenfrei von Hand ohne zusätzlichen Druck auf das Prüfsubstrat aufgelegt und anschließend 2 mal hin und her angerollt (gesamt 4 mal überrollt). Die Prüfung erfolgt bei Normklima an einer Zugprüfmaschine. Nach Ablauf der vorgegebenen Verweilzeit wird der Prüfstreifen vom unteren Ende her zur Hälfte abgezogen und im Winkel von 180° nach oben geschlagen. Das nun freie Ende des Prüfsubstrates wird in die Zugprüfmaschine eingespannt und der Prüfstreifen wird im Winkel von 180 Grad mit einer Maschinengeschwindigkeit von 300 mm/Minute abgezogen. Nach jeder Messung wird das Prüfsubstrat erneuert. Es werden mindestens 3 Einzelmessungen durchgeführt. Die Angabe der Prüfergebnisse erfolgt in N/mm Breite.

Die Untersuchungen wurden mit folgenden Parametern durchgeführt:
Trägermaterial: Polyethylenfilm / Silikon-Trennpapier
Prüfklima: 23°C, 50% rel. Luftfeuchte
Prüfstreifenbreite: 25mm
Kleberauftragsmenge: 19g/m²
Substrat: Glas

Die Ergebnisse sind in folgender Tabelle zusammengefasst:

| Zusammensetzung | Peel in N/25mm 1 min Verweilzeit | Peel in N/25mm 24 h Verweilzeit |
|---|---|---|
| Beispiel 1 | 1,0 | 1,0 |
| Beispiel 2 (Vergleich) | 1,7 | 3,2 |

## Patentansprüche

1. Klebstoffzusammensetzung, welche in einem Lösungsmittel mindestens ein erstes organisches Polymer und mindestens ein davon verschiedenes zweites organisches Polymer enthält, wobei sich die Glasübergangstemperaturen der Polymere um mindestens 50°C unterscheiden und
(a) das erste Polymer ein adhäsives Polymer ist, welches eine Glasübergangstemperatur von kleiner oder gleich 0°C aufweist und bei Auftragen der Zusammensetzung auf einem Substrat und anschließender Trocknung verfilmt und
(b) das zweite Polymer in der Zusammensetzung als dispergierte, feste Nanopartikel vorliegt, eine mittlere Teilchengröße von kleiner oder gleich 50 nm und eine Glasübergangstemperatur von mindestens 50°C aufweist und bei Auftragen der Zusammensetzung auf einem Substrat und anschließender Trocknung nicht verfilmt.

2. Klebstoffzusammensetzung nach Anspruch 1, **dadurch gekennzeichnet, dass** es sich um eine Haftklebstoffzusammensetzung in Form einer wässrigen Dispersion handelt, enthaltend als erstes Polymer ein adhäsives Emulsionspolymerisat.

3. Klebstoffzusammensetzung nach einem der vorhergehenden Ansprüche, **dadurch gekennzeichnet, dass** der Gehalt an erstem Polymer von 20 bis 70 Gew.% und der Gehalt der zweitem Polymer von 5 bis 25 Gew.% beträgt.

4. Klebstoffzusammensetzung nach einem der vorhergehenden Ansprüche, **dadurch gekennzeichnet, dass** es sich bei dem ersten Polymer um ein durch radikalische Polymerisation erhältliches Polymer handelt, welches zu mindestens 40 Gew.-% aus Hauptmonomeren aufgebaut ist, welche ausgewählt sind aus der Gruppe bestehend aus C1 bis C20 Alkyl(meth)acrylaten, Vinylestern von bis zu 20 C-Atome enthaltenden Carbonsäuren, Vinylaromaten mit bis zu 20 C-Atomen, ethylenisch ungesättigten Nitrilen, Vinylhalogeniden, Vinylethern von 1 bis 10 C Atome enthaltenden Alkoholen, aliphatischen Kohlenwasserstoffen mit 2 bis 8 C Atomen und ein oder zwei Doppelbindungen und Mischungen dieser Monomeren.

5. Klebstoffzusammensetzung nach Anspruch 1, **dadurch gekennzeichnet, dass** es sich bei dem ersten Polymer um ein Polyurethan handelt.

6. Klebstoffzusammensetzung nach einem der vorhergehenden Ansprüche, **dadurch gekennzeichnet, dass** es sich bei dem zweiten Polymer um ein durch radikalische Polymerisation erhältliches Polymer handelt, welches aufgebaut ist aus mindestens einem Vinylaromaten.

7. Klebstoffzusammensetzung nach einem der vorhergehenden Ansprüche, **dadurch gekennzeichnet, dass** die Glasübergangstemperatur des ersten Polymers von -60 bis -10 °C beträgt.

8. Klebstoffzusammensetzung nach einem der vorhergehenden Ansprüche, **dadurch gekennzeichnet, dass** die Glasübergangstemperatur des zweiten Polymers größer oder gleich 70°C beträgt.

9. Klebstoffzusammensetzung nach einem der vorhergehenden Ansprüche, **dadurch gekennzeichnet, dass** die mittlere Teilchengröße der Polymerpartikel des zweiten Polymers von 10 bis 40 nm beträgt.

10. Klebstoffzusammensetzung nach einem der vorhergehenden Ansprüche, **dadurch gekennzeichnet, dass** es sich um eine wässrige Dispersion handelt mit Gehalt an
(a) 20 bis 70 Gew.% eines adhäsiven Emulsionspolymerisats mit einer Glasübergangstemperatur von -60 bis -10 °C als erstem Polymer, erhältlich durch radikalische Polymerisation und aufgebaut zu mindestens 40 Gew.-% aus Hauptmonomeren, welche ausgewählt sind aus der Gruppe bestehend aus C1 bis C20 Alkyl(meth)acrylaten, Vinylestern von bis zu 20 C-Atome enthaltenden Carbonsäuren, Vinylaromaten mit bis zu 20 C-Atomen, ethylenisch ungesättigten Nitrilen, Vinylhalogeniden, Vinylethern von 1 bis 10 C Atome enthaltenden Alkoholen, aliphatischen Kohlenwasserstoffen mit 2 bis 8 C Atomen und ein oder zwei Doppelbindungen und Mischungen dieser Monomeren; und
(b) 5 bis 25 Gew.% an partikelförmigem, festen zweiten Polymer mit einer Glasübergangstemperatur von größer oder gleich 70 °C und einer mittleren Teilchengröße der Polymerpartikel von 10 bis 40 nm.

11. Selbstklebender Artikel, wobei mindestens eine Oberfläche eines Substrates zumindest teilweise beschichtet ist mit einer Klebstoffzusammensetzung gemäß einem der Ansprüche 1 bis 9.

12. Selbstklebender Artikel nach Anspruch 11, **dadurch gekennzeichnet, dass** das Substrat Papier oder eine Polymerfolie ist.

13. Selbstklebender Artikel nach Anspruch 11 oder 12, **dadurch gekennzeichnet, dass** er wiederabziehbar ist und es sich um ein Papieretikett, ein Folienetikett, ein Klebeband oder um eine Klebefolie handelt.

14. Mit wiederabziehbaren Folien, Bändern oder Etiketten gemäß dem vorhergehenden Anspruch versehene Substrate.

15. Verwendung von organischen Polymerpartikeln mit einer mittleren Teilchengröße von kleiner oder gleich 50 nm und einer Glasübergangstemperatur von mindestens 50°C zur Herstellung wiederablösbarer, selbstklebender Artikel.

16. Verwendung nach dem vorhergehenden Anspruch, **dadurch gekennzeichnet, dass** die Polymerpartikel im Wesentlichen aus Polystyrol bestehen.

## Claims

1. An adhesive composition which comprises in a solvent at least one first organic polymer and at least one different second organic polymer, the glass transition temperatures of the polymers differing by at least 50°C, where
(a) the first polymer is an adhesive polymer which has a glass transition temperature of less than or equal to 0°C and forms a film when the composition is applied to a substrate and subsequently dries, and
(b) the second polymer is present in the composition in the form of dispersed, solid nanoparticles, has an average particle size of less than or equal to 50 nm and a glass transition temperature of at least 50°C, and does not form a film when the composition is applied to a substrate and subsequently dried.

2. The adhesive composition according to claim 1, which is a pressure-sensitive adhesive composition in the form of an aqueous dispersion, comprising as first polymer an adhesive emulsion polymer.

3. The adhesive composition according to either of the preceding claims, wherein the amount of first polymer is from 20% to 70% by weight and the amount of the second polymer is from 5% to 25% by weight.

4. The adhesive composition according to any of the preceding claims, wherein the first polymer is a polymer which is obtainable by free-radical addition polymerization and is composed to an extent of at least 40% by weight of principal monomers which are selected from the group consisting of C1 to C20 alkyl (meth)acrylates, vinyl esters of carboxylic acids comprising up to 20 C atoms, vinylaromatics having up to 20 C atoms, ethylenically unsaturated nitriles, vinyl halides, vinyl ethers of alcohols comprising 1 to 10 C atoms, aliphatic hydrocarbons having 2 to 8 C atoms and one or two double bonds, and mixtures of these monomers.

5. The adhesive composition according to claim 1, wherein the first polymer is a polyurethane.

6. The adhesive composition according to any of the preceding claims, wherein the second polymer is a polymer which is obtainable by free-radical addition polymerization and which is composed of at least one vinylaromatic.

7. The adhesive composition according to any of the preceding claims, wherein the glass transition temperature of the first polymer is from -60 to - 10°C.

8. The adhesive composition according to any of the preceding claims, wherein the glass transition temperature of the second polymer is greater than or equal to 70°C.

9. The adhesive composition according to any of the preceding claims, wherein the average particle size of the polymer particles of the second polymer is from 10 to 40 nm.

10. The adhesive composition according to any of the preceding claims, wherein it is an aqueous dispersion containing
(a) 20% to 70% by weight of an adhesive emulsion polymer having a glass transition temperature of -60 to -10°C as first polymer, obtainable by free-radical addition polymerization and composed to an extent of at least 40% by weight of principal monomers which are selected from the group consisting of C1 to C20 alkyl (meth)acrylates, vinyl esters of carboxylic acids comprising up to 20 C atoms, vinylaromatics having up to 20 C atoms, ethylenically unsaturated nitriles, vinyl halides, vinyl ethers of alcohols comprising 1 to 10 C atoms, aliphatic hydrocarbons having 2 to 8 C atoms and one or two double bonds, and mixtures of these monomers; and
(b) 5% to 25% by weight of particulate, solid second polymer having a glass transition temperature of greater than or equal to 70°C and an average particle size of the polymer particles of 10 to 40 nm.

11. A self-adhesive article, at least one surface of a substrate being at least partly coated with an adhesive composition according to any of claims 1 to 9.

12. The self-adhesive article according to claim 11, wherein the substrate is paper or a polymer film.

13. The self-adhesive article according to claim 11 or 12, which is removable and is a paper label, a film label, an adhesive tape or an adhesive sheet.

14. A substrate provided with a removable sheet, tape or label according to the preceding claim.

15. The use of organic polymer particles having an average particle size of less than or equal to 50 nm and a glass transition temperature of at least 50°C to produce redetachable self-adhesive articles.

16. The use according to the preceding claim, wherein the polymer particles are composed substantially of polystyrene.

## Revendications

1. Composition d'adhésif, qui contient dans un solvant au moins un premier polymère organique et au moins un deuxième polymère organique différent de celui-ci, les températures de transition vitreuse des polymères différant d'au moins 50 °C et
(a) le premier polymère étant un polymère adhésif qui présente une température de transition vitreuse inférieure ou égale à 0 °C et forme un film lors de l'application de la composition sur un support et du séchage subséquent et
(b) le deuxième polymère dans la composition est présent sous forme de nanoparticules solides dispersées, présente une taille moyenne de particule inférieure ou égale à 50 nm et une température de transition vitreuse d'au moins 50 °C et ne forme pas de film lors de l'application de la composition sur un support et du séchage subséquent.

2. Composition d'adhésif selon la revendication 1, **caractérisée en ce qu'**il s'agit d'une composition d'autoadhésif sous forme d'une dispersion aqueuse, contenant en tant que premier polymère un produit adhésif de polymérisation en émulsion.

3. Composition d'adhésif selon l'une quelconque des revendications précédentes, **caractérisée en ce que** la teneur en premier polymère vaut de 20 à 70 % en poids et la teneur en le deuxième polymère vaut de 5 à 25 % en poids.

4. Composition d'adhésif selon l'une quelconque des revendications précédentes, **caractérisée en ce que** le premier polymère consiste en un polymère pouvant être obtenu par polymérisation radicalaire, qui est constitué à raison d'au moins 40 % en poids de monomères principaux qui sont choisis dans le groupe consistant en des (méth)acrylates d'alkyle en C₁-C₂₀, des esters vinyliques d'acides carboxyliques contenant jusqu'à 20 atomes de carbone, des composés vinylaromatiques ayant jusqu'à 20 atomes de carbone, des nitriles à insaturation éthyléniques, des halogénures de vinyle, des éthers vinyliques d'alcools contenant de 1 à 10 atomes de carbone, des hydrocarbures aliphatiques ayant de 2 à 8 atomes de carbone et comportant une ou deux doubles liaisons et des mélanges de ces monomères.

5. Composition d'adhésif selon la revendication 1, **caractérisée en ce que** le premier polymère est un polyuréthane.

6. Composition d'adhésif selon l'une quelconque des revendications précédentes, **caractérisée en ce que** le deuxième polymère consiste en un polymère pouvant être obtenu par polymérisation radicalaire, qui est constitué d'au moins un composé vinylaromatique.

7. Composition d'adhésif selon l'une quelconque des revendications précédentes, **caractérisée en ce que** la température de transition vitreuse du premier polymère vaut de -60 à -10 °C.

8. Composition d'adhésif selon l'une quelconque des revendications précédentes, **caractérisée en ce que** la température de transition vitreuse du deuxième polymère est supérieure ou égale à 70 °C.

9. Composition d'adhésif selon l'une quelconque des revendications précédentes, **caractérisée en ce que** la taille moyenne de particule des particules de polymère du deuxième polymère vaut de 10 à 40 nm.

10. Composition d'adhésif selon l'une quelconque des revendications précédentes, **caractérisée en ce qu'**il s'agit d'une dispersion aqueuse contenant
(a) 20 à 70 % en poids d'un produit adhésif de polymérisation en émulsion ayant une température de transition vitreuse de -60 à -10 °C, en tant que premier polymère, pouvant être obtenu par polymérisation radicalaire et constitué à raison d'au moins 40 % en poids de monomères principaux qui sont choisis dans le groupe consistant en des (méth)acrylates d'alkyle en C₁-C₂₀, des esters vinyliques d'acides carboxyliques contenant jusqu'à 20 atomes de carbone, des composés vinylaromatiques ayant jusqu'à 20 atomes de carbone, des nitriles à insaturation éthyléniques, des halogénures de vinyle, des éthers vinyliques d'alcools contenant de 1 à 10 atomes de carbone, des hydrocarbures aliphatiques ayant de 2 à 8 atomes de carbone et comportant une ou deux doubles liaisons et des mélanges de ces monomères ; et
(b) 5 à 25 % en poids de deuxième polymère solide particulaire, ayant une température de transition vitreuse supérieure ou égale à 70 °C et ayant une taille moyenne de particule des particules de polymère de 10 à 40 nm.

11. Article autoadhésif, au moins une surface d'un support étant au moins en partie revêtue avec une composition d'adhésif selon l'une quelconque des revendications 1 à 9.

12. Article autoadhésif selon la revendication 11, **caractérisé en ce que** le support est du papier ou un film de polymère.

13. Article autoadhésif selon la revendication 11 ou 12, **caractérisé en ce qu'**il est repositionnable et consiste en une étiquette en papier, une étiquette en film, un ruban adhésif ou un film adhésif.

14. Supports munis de films, rubans ou étiquettes repositionnables selon la revendication précédente.

15. Utilisation de particules de polymères organiques ayant une taille moyenne de particule inférieure ou égale à 50 nm et une température de transition vitreuse d'au moins 50 °C, pour la fabrication d'articles autoadhésifs repositionnables.

16. Utilisation selon la revendication précédente, **caractérisée en ce que** les particules de polymères consistent essentiellement en polystyrène.
